# EUROPEAN PATENT SPECIFICATION

(11) **EP 1 208 446 B1**
(45) Date of publication and mention of the grant of the patent: **11.07.2007**
(21) Application number: 00953953.7
(22) Date of filing: 11.08.2000
(51) Int. Cl.: G06F 15/16, G06F 11/34

(54) **PROFESSIONAL TIME TRACKING AND RECOUPING SYSTEM AND SOFTWARE**
PROFESSIONELLE ECHTZEITVERFOLGUNG UND WIEDERVERWERTUNGSSYSTEM UND SOFTWARE
SYSTEME ET LOGICIEL DE SUIVI ET D'IMPUTATION COMPTABLE DES TEMPS DE TRAVAIL DES PROFESSIONS LIBERALES

(30) Priority: 12.08.1999 US 148491 P
(43) Date of publication of application: 29.05.2002
(73) Proprietor: Appliede, Inc., Yardley, PA 19067 (US)
(72) Inventor: ZAPIEC, Charles, J., Yardley, PA 19067 (US); GREENBERG, Daniel, A., Kendell Park, NJ 08824 (US); WINWOOD, Mark, Longwood, FL 32779 (US)
(74) Representative: Grünecker, Kinkeldey, Stockmair & Schwanhäusser Anwaltssozietät
(86) International application number: PCT/US2000/021923
(87) International publication number: WO 2001/013258

(56) References cited:
- EP-A- 0 867 811
- WO-A-98/43380
- US-A- 5 103 392
- US-A- 5 696 702
- US-A- 5 796 952
- US-A- 5 954 798
- US-A- 5 958 016
- US-A- 5 970 477

## Description

This application claims priority under 35 U.S.C. §119(e) for provisional application number 60/148, 491 filed on August 12, 1999.

### Background of the Invention

The Internet provides a vast array of materials, which are essential for legal, scientific, medical, accounting, consulting financial, business evaluation, and insurance work. These materials include textual documents, multimedia materials, databases, and other forms of information.

In the legal field, the types of information being placed online (on the Internet) include court decisions, federal, state, and local statutes, and other governmental information. Law firms make extensive use of the Internet and need to obtain this information to conduct business for their clients. Similarly, the accounting consulting firms and business consulting firms extensively perform business research and competitive intelligence analysis on the Internet. Scientists and engineers often perform scientific and technical research on the Internet.

In many professions, including law firms, accounting firms, management consulting firms, investigators, and financial and business analysts, the expenses incurred in obtaining the information from the Internet must be recovered from the client. The client, in many instances, will insist on a detailed record of the time spent performing research on the Internet. The clients generally require a detailed list of the work performed including the web sites visited, the time spent on each web site, and what was accomplished.

Traditional methods for time tracking include manually entering ¼ hour increments on time sheets, or manually entering time increments into a time tracking program running on a mainframe or a personal computer. Some traditional time tracking systems utilize computers and allow lawyers, and other professionals, to select client matter numbers that allocate time to the appropriate client matter, and generate the corresponding charge on an invoice in an electronic manner. Yet, even in these computer-based systems, the time entries and associated charges must be manually entered as a direct interface to the Internet, for the purpose of time tracking does not exist.

In addition to time tracking systems, professionals such as lawyers have access to proprietary commercial databases, which they can use for research. These databases contain information that is commonly termed primary source material, and includes court decisions and other critical information. In the past, the time spent researching on these databases and the database charges were tracked and charged to the client.

Thus, as primary source materials migrate onto the Internet and as more and more professionals (users) use the Internet for access to these materials, the difficulty in tracking and billing for this time increases tremendously, due to the lack of appropriate systems. This results in lost billable time and the increase of costs for manual entry of time records, for the companies and law firms using the Internet.

US 5,696,702 discloses a time and work tracker comprising a data collector means for monitoring certain portions of a user's computer activity.

For the foregoing reasons, there is a need for a system and method that can be used to track time spent on the Internet or other network, to monitor sites visited, and to report back the amount of time spent at each site.

### Summary of the Invention

The present invention provides a method according to claim 1 and a system according to claim 10.

The present invention provides an apparatus and a method for tracking time spent on one or more Internet sites. The tracked information may then be used to generate detailed records containing the Uniform Resource Locators (URLs) of the sites visited, the exact time spent on each site, and a record of any downloads, file transfers, or other activities performed by the user.

One or more reports may be generated from the detailed records and list the activity by each user, tabulating the web site accessed and the time spent on that web site. This information may then be utilized to generate an invoice for the work performed. In one embodiment, the reports are stored electronically and are accessed by an invoicing program, which uses the stored data in conjunction with the established hourly rate to generate a detailed invoice for the client.

The present invention may be deployed on a personal computer, and enabled by a service operator who provides the time tracking and recouping system (i.e., a software means). In this implementation, files with web site usage information are sent periodically to the service provider which charges the user of the software based on the amount of time which they spent accessing web sites. The service provider subsequently receives periodic payments for the use of the software. The actual software may be distributed to users free of charge, and revenues can be collected as recurring payments for the use of the system.

In another embodiment, the service provider may charge the user based on Internet usage and the size of the entity (company or law firm) using the software. This charge is generally based on the usage time that is comparatively lower to the hourly rates being charged to the client. Alternatively, a percentage of the charge received from the client by the user may be forwarded to the service provider for the actual use of the system and the software.

One embodiment of the present invention requires the user to enter a user ID and a client matter number upon initiation of the browser or other software used to access the Internet. Entering the user ID and client matter ensures that the usage time will be charged to clients.

A software means in accordance with the principles of the present invention, may operate invisibly in the background, recording each entry including all URLs entered and sites visited. The software means may automatically record all the Internet activity and corresponding usage time. As an optional feature, the user may be provided with a capability to disable the functionality of the software, when the user does not wish to track the Internet usage time.

The file containing Internet usage information may be stored locally or on a server accessible via a network. The system administrator may generate, based on the Internet usage information, a variety of reports that summarize the amount of time spent by each user at each site. This information may be manually uploaded or electronically downloaded directly into the firm's time and billing software, which permits recovery of the costs from the client.

One of the features of the present invention is that privacy of the users and the clients is protected and the confidential information associated with the user and the client is not distributed. The information transmitted to the service provider includes the user ID and the history of the searches with sufficient detail to calculate and create an invoice having service charges for using the time tracking and recouping system. This allows the specific and detailed information in reference to that bill to remain protected and precludes the dissemination of the information over the network. The information including the client/matter number, the record of the downloaded files, and any other information related to the client matter remains at the law firm or at other professional sites, and is not disseminated.

In another embodiment of the invention, the principles of the present invention are used to track Internet usage of employees or contractors which are working remotely, including the individuals working at home. The Internet access history may also be used to determine if the employee or contractor has used time searching the Internet appropriately. In some circumstances the remuneration to the employee or contractor may be linked to the effective use of the Internet.

These and other features and objects of the invention will be more fully understood from the following detailed description of the preferred embodiments which should be read in light of the accompanying drawings.

### Brief Description of the Drawings

The accompanying drawings, which are incorporated in and form a part of the specification, illustrate the embodiments of the present invention and, together with the description serve to explain the principles of the invention.

In the drawings:
FIG. 1 illustrates an exemplary context diagram representing the system in use;
FIG. 2 illustrates an exemplary use-case model representation of the system;
FIG. 3A illustrates an exemplary time tracking and recouping system logon window;
FIG. 3B illustrates an exemplary time tracking and recouping system icon in a system tray;
FIG. 3C illustrates an exemplary time tracking and recouping system menu presented to the user;
FIG. 4 illustrates an exemplary computer system on which the present invention can be implemented;
FIG. 5A illustrates an exemplary report sorted by client matter number;
FIG. 5B illustrates an exemplary report sorted by user ID;
FIG. 6 illustrates a flowchart for the logon function;
FIG. 7 illustrates a flowchart for the track and create Internet access history function;
FIG. 8 illustrates a flowchart for the report generation function; and
FIG. 9 illustrates a flowchart for the revenue calculation function.

### Detailed Description

### of the Preferred Embodiment

In describing a preferred embodiment of the invention illustrated in the drawings, specific terminology will be used for the sake of clarity. However, the invention is not intended to be limited to the specific terms so selected, and it is to be understood that each specific term includes all technical equivalents which operate in a similar manner to accomplish a similar purpose.

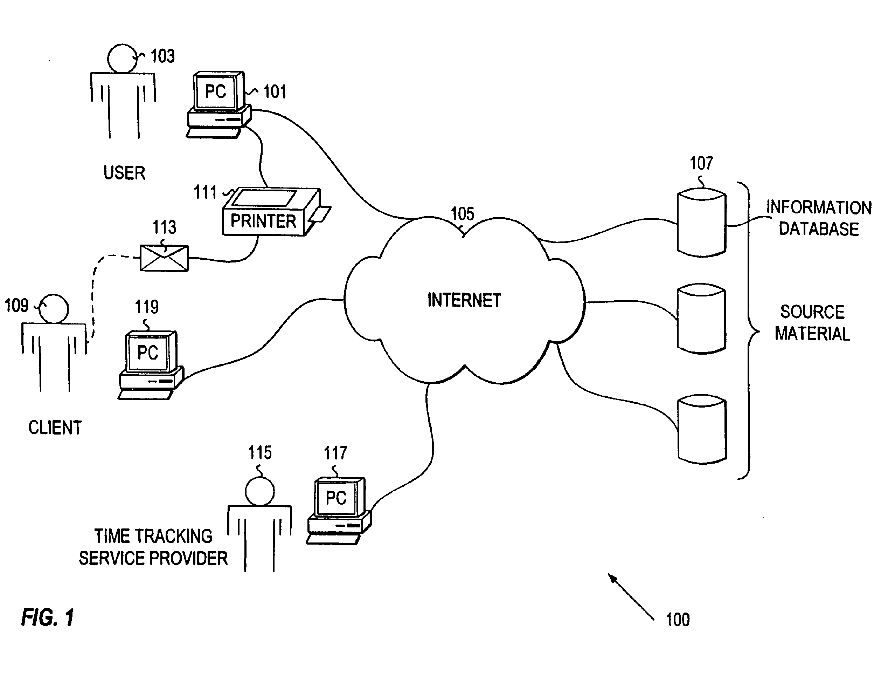

With reference to the drawings, in general, and FIGS. 1 through 9 in particular, the system of the present invention is disclosed.

FIG. 1 illustrates a time tracking and recouping system 100 in accordance with the principles of the present invention. The system is employed at a client side represented as the Personal Computer (PC) 101 to be used by a user 103 shown in the upper left-hand corner. In a law firm environment, the principles of the present invention may be implemented as a software means, resident on the lawyer's PC, paralegal's PC, or a centralized PC (i.e., a library PC). The software may be used to track attorney, paralegal and other professional's research time on the Internet. This may be accomplished by providing functionality that requires the lawyer or other professional to logon and enter a client matter number before using the PC to access the Internet.

Although the PC 101 shown is connected directly to the Internet 105 in FIG. 1, the PC 101 may be part of a network or series of networks that subsequently access the Internet or other information databases that contain source material as shown on the right side of FIG. 1. The source material may be primary or secondary source material. When used herein the term primary source material refers to information directly accessible to the public including case law, statutes, recent court decisions, or other materials of use to the professional. The secondary source material includes literature, articles, or reports and other information that are generated based on primary source material, and which may be of use to the professional. For the purposes of the principles of the present invention, the primary and secondary source material may be information compiled by a service provider, who may charge an access fee for using or accessing the material.

If in using the system 100, the user 103 via PC 101 searches the Internet for information for a client matter, the sites visited and time spent on Internet are recorded by the system 100 and stored on the hard drive of PC 101 or on another on-site or off-site storage site such as a remotely located network server (not shown). The information regarding the Internet usage may be stored as an Internet access history ledger that may be subsequently accessed to generate a listing of the time spent surfing the Internet for the client matter. The user 103, e.g., a lawyer or law firm can then generate an invoice for the time spent on the Internet and send that bill to the client.

In an alternate embodiment, the principles of the present invention may be used to track Internet usage by employees or contractors working remotely, including individuals working from their home. In this case the professional, illustrated as the user 103 in FIG. 1, may be working at home. The professional may also be an individual who is being paid to perform research on the Internet as part of their job function. In this embodiment, the client 109 of FIG. 1 is the employer, who receives a record of the Internet usage from the time tracking service provider. The employer may use this information to determine if the employee or contractor has used the time on the Internet appropriately. In some circumstances, the employee's pay may be dependent on their usage of the Internet. In addition, the employer may use the information for creating an invoice for a client of the firm, as previously described.

One feature of the present invention is that the invoice generated, based on the collected information, contains detailed specific information regarding the sites visited and the time spent on the sites. This ensures the client that the time spent by the professional was well spent, and was indeed related to the matter at hand. As shown in FIG. 1 an invoice 113 may be printed via printer 111 and may be subsequently transmitted to client 109. Alternatively, an electronic invoice (not shown) may be directly transmitted from PC 101 to PC 119 for the time spent accessing information on the network.

One feature of the system is the ability to generate revenue for the time tracking services. As shown in FIG. 1 a time tracking service provider 115 may employ a software means or a system that provides a service to be used by user 103 to recoup the cost of the research activity from the client. This may be accomplished by transmitting a file from the user 103 to the time tracking service provider 105 indicating the amount of time spent on the Internet. The transmitted file may be a copy of the record created by the system 100 at the user PC 101. The time tracking service provider 115, in an automated fashion, via the use of a personal computer (PC) 117 may generate an invoice for the user 103 who then pays the time tracking service provider 115 for this time tracking and recouping service system and software.

It is to be noted that the usage time may be collected over one Internet session, or alternatively, may be accumulated over a plurality of Internet sessions and subsequently processed. The process of billing for the actual use of the service may occur automatically and transparently to the user 103 who is using the system, so that payments are in fact made automatically to the time tracking service provider 115. In an alternate embodiment, the data files are sent to the tracking service provider 115 automatically, and in return, the user 103 or other professional receives an invoice in the mail and pays it using traditional methods.

In one embodiment, a software means in accordance with the principles of the present invention resides on the user's PC 101 that automatically transmits the Internet access history of the Internet usage using an Internet File Transfer Protocol (FTP). This may occur in real-time while the user accesses the Internet. Alternatively, the transmission of the Internet access history ledger to the service provider may occur on a daily/weekly/monthly basis during off-peak hours. Preferably, the Internet usage data is collected for one Internet session (i.e., from the time the user logs on to the time when the user logs out).

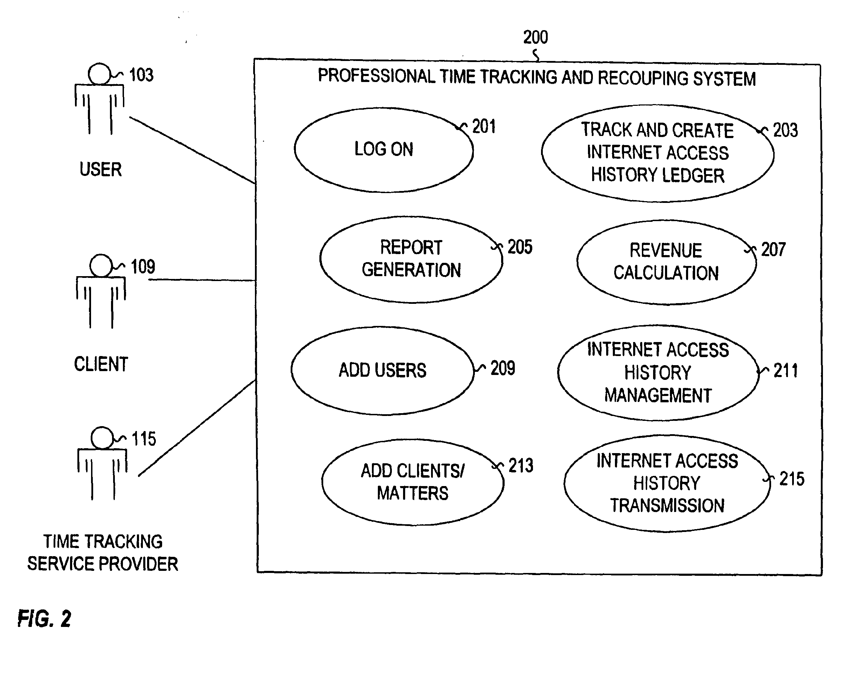

FIG. 2 illustrates a use-case diagram for the time tracking and recouping system and software. In FIG. 2 the same actors as those described in FIG. 1 are illustrated. As with FIG. 1, the user 103 is a representative of a professional using the system and a number of other professionals including paralegals, scientific researchers, accountants, or physicians can use the system for their research. It is to be noted that the invention is not limited to one particular professional group but can be utilized by any professional interested in tracking time.

The use-case diagram of a professional time tracking and recouping system 200, as illustrated in FIG. 2, contains the function modules of logon 201, track and create Internet access history ledger 203, report generation 205, revenue calculation 207, add users 209, Internet access history management 211, add client/matters 213, and Internet access history ledger transmission 215.

The logon function module 201 describes the way in which a user logs on using a user ID and identifies a client for which the work will be performed. The track and create Internet access history ledger module 203 represents the function of tracking the Internet sites visited and monitoring and calculating the time spent on each site. This includes the ability to monitor each individual Web page visited and can include monitoring of downloads and other Web based operations. The report generation module 205 generates the detailed list of sites visited and the time spent on each site based on the tracking, which is recorded by the track and create Internet access history ledger function.

The revenue calculation module 207 is used by the time tracking service provider to determine the fee for using the system and software and to invoice the lawyer or other professional. The add users module 209 is used by the user 103 or other administrative staff of the professional organization to add users to the system. The Internet access history management module 211 is used by the system administrator to control specifics of the Internet access history ledger, including tracking of the sites visited, filtering the sites visited and reading the ledger itself. The add clients/matters module 213 allows an administrator or professional to add client matter numbers and clients to a log file. The Internet access history transmission module 215 can be used to transmit the Internet access history ledger to the time tracking service provider for revenue calculation.

One feature of the system of FIG. 2 is the ability of the add clients/matters function to interface with other time billing and management systems such that once clients/matters are added to the master time billing system they can be automatically input into the time tracking and recouping system. Another feature of the invention is the ability of the time tracking and recouping system 200 to interface with docketing systems such that client matters can be retrieved from a patent or other legal matter docking system.

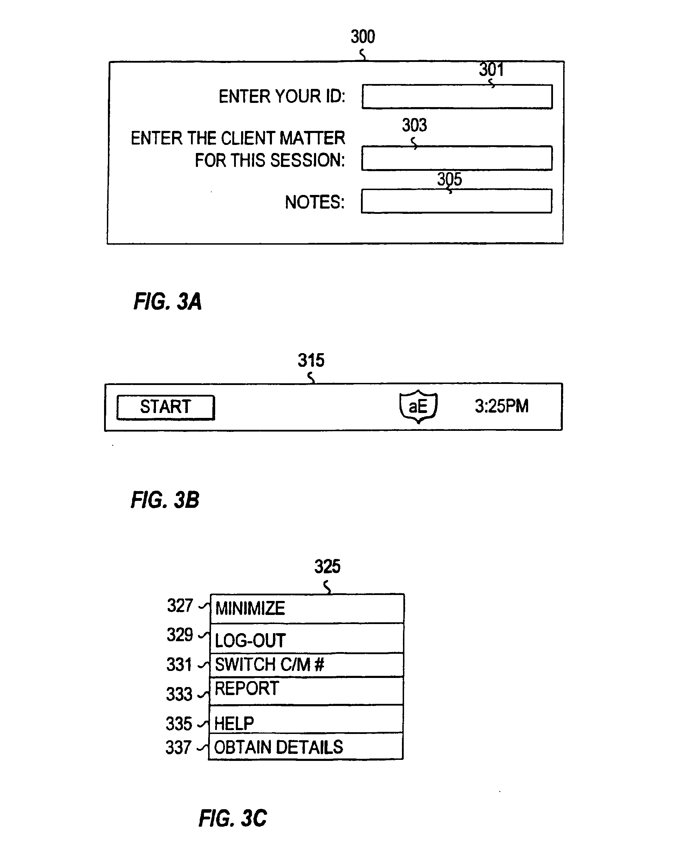

In accordance with the principles of the present invention, the system may require user authentication prior to permitting the use of the system. FIG. 3A represents an exemplary logon window 300 for a system operating in accordance with the principles of the present invention. For example, FIG. 3 illustrates how the user 103 may be presented with a request to enter an ID number 301, enter the client matter for the session 303 and enter any optional text in a notes field 305, such as a name of a current matter or project.

FIG. 3B represents an exemplary icon 315 for the system, which in this case is labeled "aE". This icon may appear in a system tray when the user is using the operating system sold by the Microsoft Corporation, Redmond, WA, under the trademark WINDOWS. Although this embodiment of the present invention is illustrated as being part of a WINDOWS-based system, the invention is not limited to a specific operating system embodiment but can in fact be used on other operating systems including Macintosh, Unix, or Linux.

FIG. 3C represents an exemplary menu that may be presented to the user 103 after the user has clicked on the icon in the system tray. The menu 325 presents different options to the user 103 including minimizing the window 327, logging out of the system 329, the client matter number 331, generating a report 333, looking for help 335 (i.e., determining the revision number), and obtaining details regarding the system software 337.

In one embodiment, the present invention is implemented as a time tracking and recouping software that may be downloaded to the computer of a user, such as a lawyer or other professional, wherein the software operates transparently in conjunction with the existing browser on the user's computer. The software of the present invention may not be browser-dependent and may work with a number of browsers including the browser sold and/or distributed by the Netscape Corporation, Mountain View, CA, under the trademark NAVIGATOR or the browser sold by the Microsoft Corporation, Redmond, WA, under the trademark INTERNET EXPLORER.

In this embodiment, upon installation, the software becomes active at any point upon when the browser is activated and requires the user to logon through a logon window such as that shown in FIG. 3A. Although the user may access the functionality through the icon in the system tray shown in FIG. 3B and may in fact select options shown in FIG. 3C, generally, surfing of the Internet is not permitted without entering a user ID and client matter number.

As an optional feature, the user may can be provided with an option to disable the functionality of the software (i.e., the user may surf the Internet without tracking). Alternatively, especially in the employer_employee environment, the functionality of the software may not be disabled, i.e., all the Internet activities conducted by the user at the employer-provided computer will be recorded and analyzed.

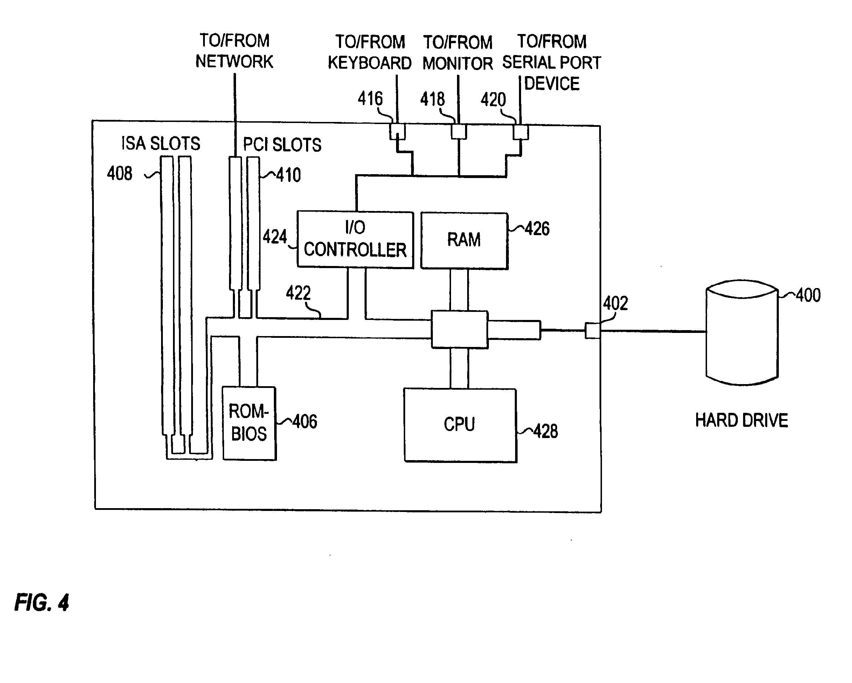

FIG. 4 shows the block diagram of an exemplary computer system for the realization of the principles of the present invention especially the time tracking and recouping. In this computer system, the system bus 422 transports data amongst the Central Processing Unit (CPU) 428, the Random Access Memory (RAM) 426, Read Only Memory - Basic Input Output System (ROM-BIOS) 406 and other components. The CPU 428 accesses a hard drive 400 through a disk controller 402. The standard input/output devices are connected to the system bus 422 through the I/O controller 424. A keyboard is attached to the I/O controller 424 through a keyboard port 416 and the monitor is connected through a monitor port 418. The serial port device uses a serial port 420 to communicate with the I/O controller 424. Industry Standard Architecture (ISA) expansion slots 408 and Peripheral Component Interconnect (PCI) expansion slots 410 allow additional cards to be placed into the computer. In a preferred embodiment, a network card is available to interface a local area, wide area, or other network.

Although FIG. 4 represents a specific computer design, the invention may be utilized on a number of different computer types including distributed processing systems or client-server based systems. The software for the time tracking and recouping system may be realized in a number of programming languages known to those skilled in the art including C, C++, Java, Perl and other object oriented or procedural languages. It is to be noted that the use of the present invention is not limited by choice of a specific programming language or combination of languages.

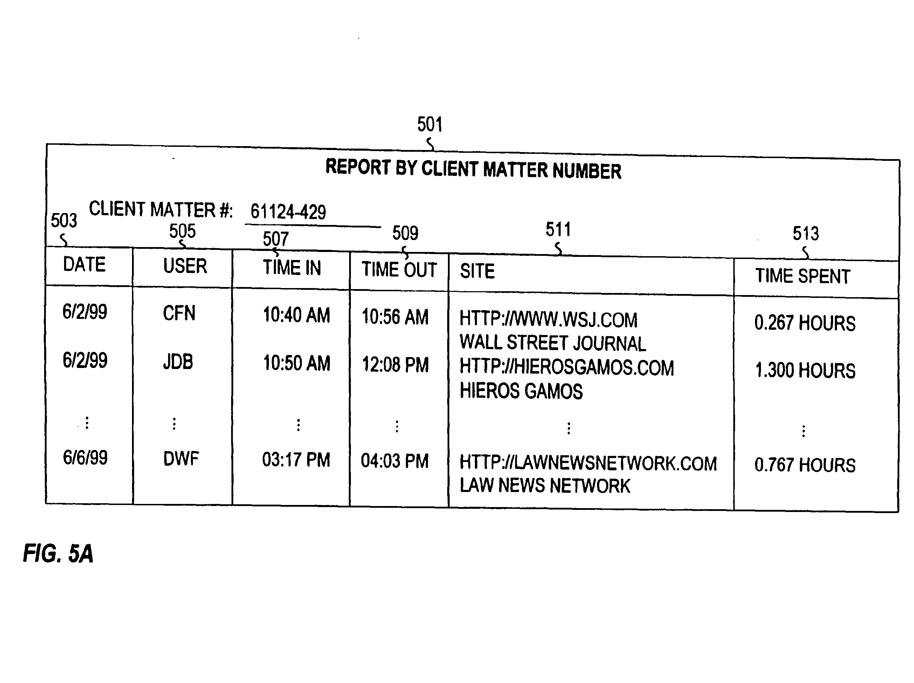

FIG. 5A represents an exemplary report by client matter number. The exemplary report 501 comprises date log 503, user information 505, time in 507, time out 509, site 511 (URL or index of the sites visited), and the actual time spent 513 for a particular date range. As shown in FIG. 5A, the client matter numbers are indicated at the top. Because this system operates across the network, the surfing times may overlap, and a plurality of users simultaneously accessing the Internet may be recorded and reported. FIG. 5A an overlap between different users termed CFN, JDB, and DWF.

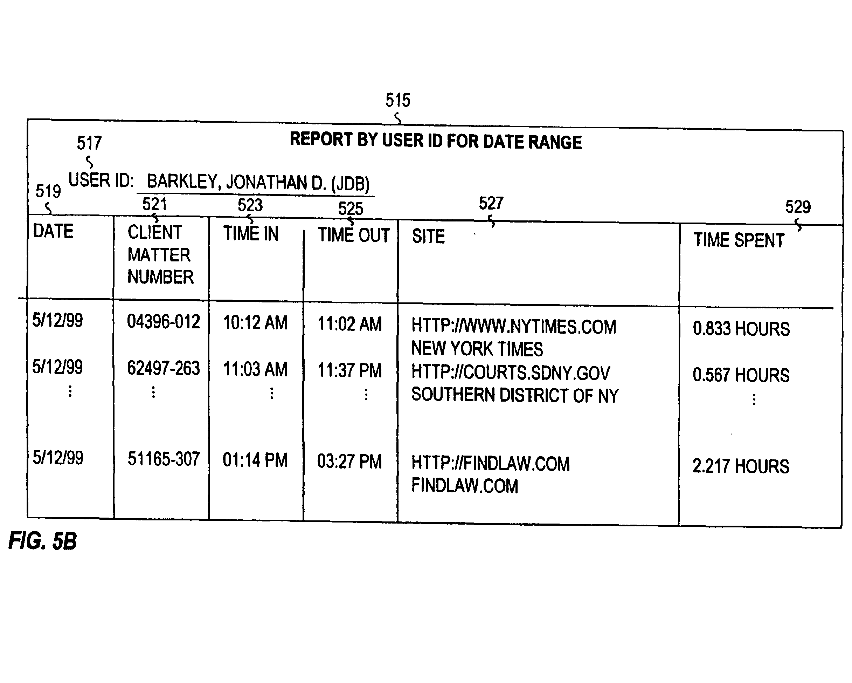

FIG. 5B represents another exemplary report 515, wherein the matters are sorted according to the user ID 517. The report comprises date log 519, client matter #521, time in 523, and time spent 529.

Although reports illustrated in FIG. 5A and 5B represent printed reports, which can be generated, it is also possible to generate electronic reports in formats including spreadsheets and database files. The database files can be used by relational database or object-oriented database programs. In an alternative embodiment, the text files may be generated for transmission to other billing or time tracking software.

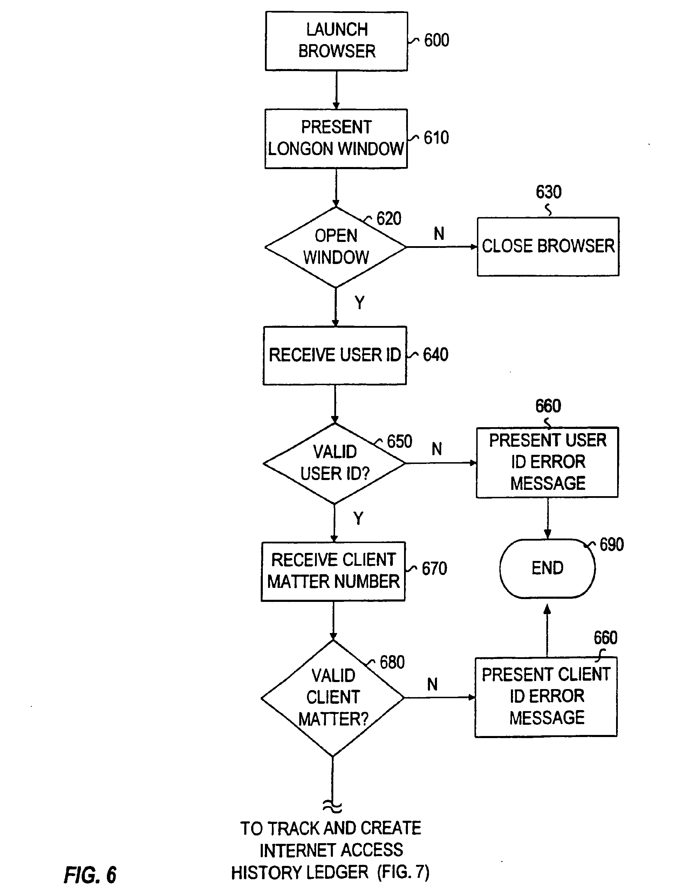

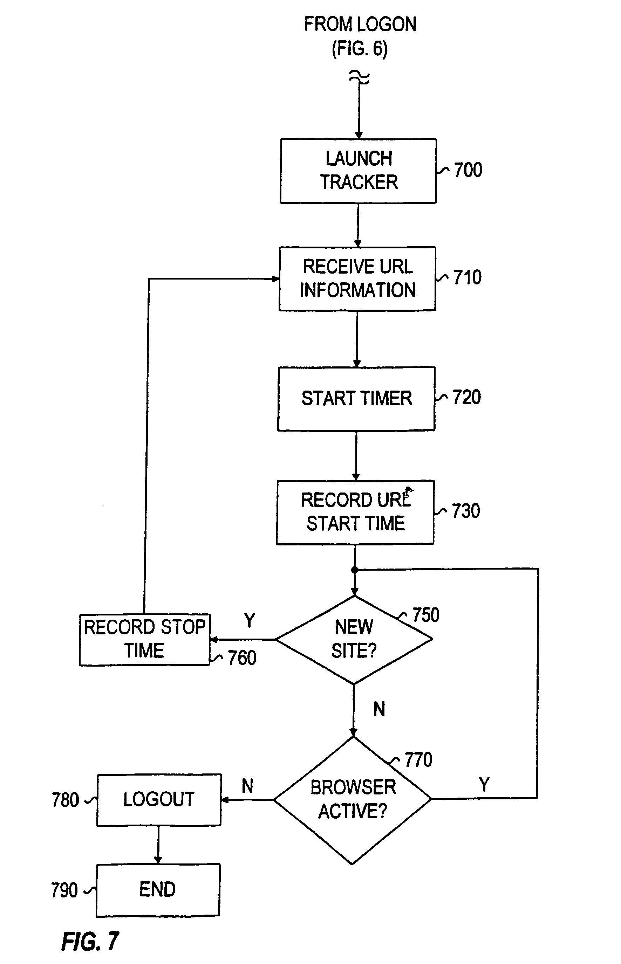

FIG. 6 illustrates a flowchart for the logon function in accordance with the principles of the present invention. In this function, the browser is launched in a launch browser step 600. Subsequent to launching the browser, the user is presented a logon window in step 610. The next step 620 is a decision function to determine if the corresponding window is open or if the window has been closed by the user. If in step 620 it is determined that the browser is closed, subsequently in step 630 the window is closed. This ensures that if a user ID and client matter number have not been entered it is impossible to use the browser.

If in step 620 it is determined that the window is open, then in step 640, the user ID is received. Subsequently, in step 650, a test is performed to determine the validity of the user ID. If the user ID is not valid an error message is presented in step 660 and the process ends in step 690. If the user ID is valid, a client matter number is requested and received in step 670.

In step 680, it is determined whether the client matter is valid. If the client matter number is invalid, in step 680, an error message is presented and the process ends in step 690. If the client matter number is valid, the process moves on to the track and creates Internet access history ledger as illustrated FIG. 7.

FIG. 7 illustrates a flowchart for the track and create Internet access history ledger function in accordance with the principles of the present invention. In this function, the URLs for the sites visited and Web pages presented to the user are recorded.

As shown in FIG. 7 the process starts with a launch tracker step 700 wherein the tracker functionality is launched. Next, in step 710, the corresponding URL information is received from the user. Once the URL information has been entered by the user, a timer is started in step 720. In step 730, the URL start time is recorded and stored in a storage location. This permits recording of each interval during which the user browses a Web site.

Step 750 is a decision to determine if a new site has been accessed by the user. If a new site has been accessed, the stop time is recorded in record stop time step 760 and the process returns to step 710 wherein the new URL information is received.

If a new site has not been entered, next in step 770 it is determined whether the browser is active. Generally, if an excessive amount is passed before a new URL information is received, it is assumed that the user has moved on to perform other matters. The functionality of step 770 effectively acts as a "dead-man switch" to ensure that if the user has walked away from the terminal, opened another window corresponding to another application, or for whatever other reason is no longer active in accessing web sites they will be logged out from the system. If the browser in step 770 is not active, the user is logged out in step 780 and the process ends in step 790. Once logged out the user will need to log on again to reinitiate the procedure as illustrated in FIG. 7. If in step 770 it is determined that the browser is still active, the process returns to step 750 to determine if a new site has been accessed.

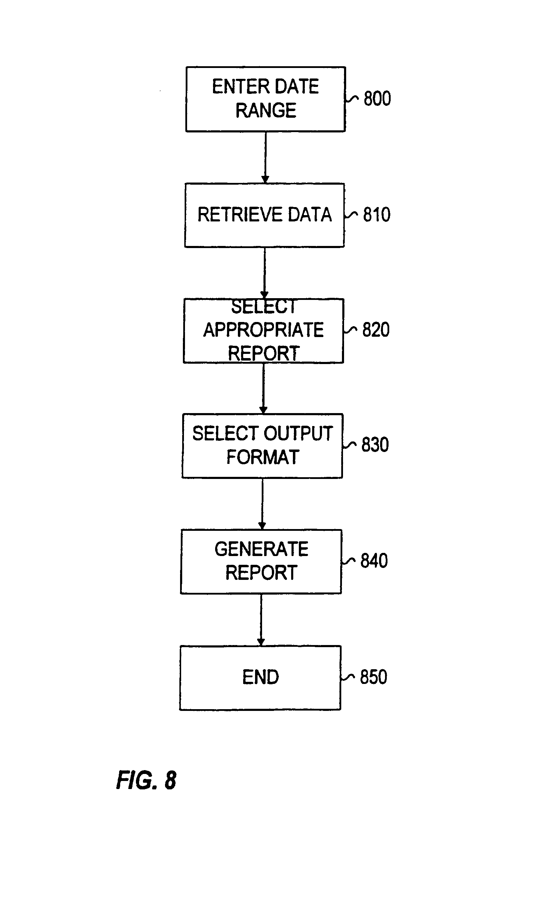

FIG. 8 illustrates a flowchart for report generation function in accordance with the principles of the present invention. In step 800 is a user input function wherein the user is permitted to enter the appropriate date range. Upon receipt of such information, the process moves to step 810 wherein the corresponding access history ledger data is retrieved from a storage location. Step 820, the appropriate type of report is selected. Generally the report selection is based on pre-determined parameters set by the user, for example, the user may select to be added in the report. In step 830, an appropriate output format based on user selections is chosen. In step 840, an applicable report is generated that may be printed or electronically transmitted to the client. Once the report has been generated to be transmitted or printed, the process ends in step 850.

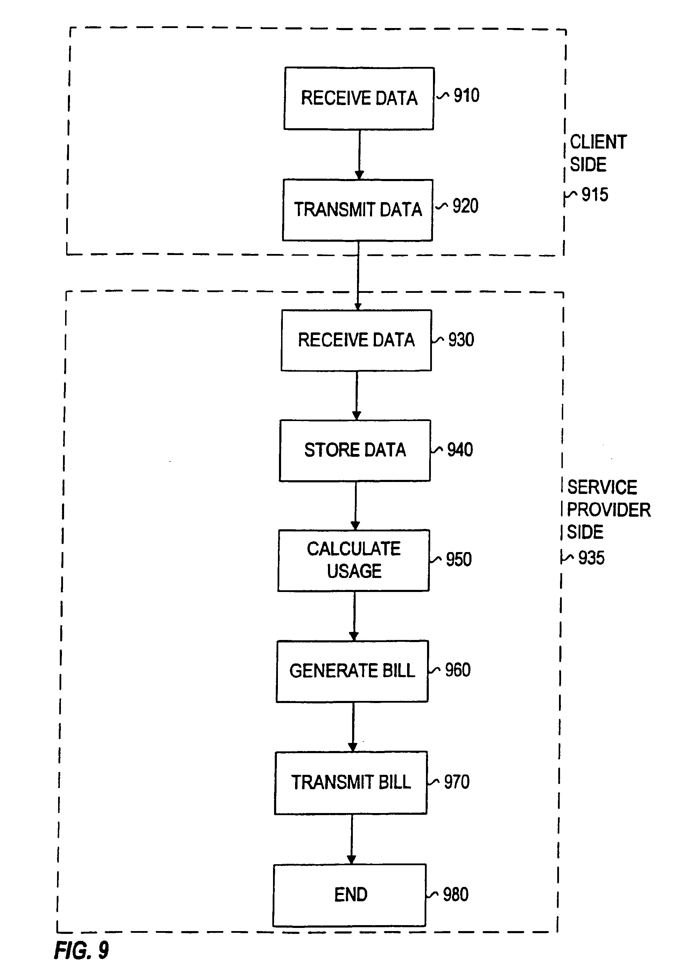

FIG. 9 illustrates a flowchart for the revenue calculation function in accordance with the principles of the present invention. Generally, the revenue calculation function takes place through software operating at the client side, which may be the lawyer or other professional professional's site. The software means or other means on the client side retrieves the data in step 910 from a storage location and transmits the data in step 920. In this embodiment, the data is transmitted as an FTP file containing all the relevant information regarding different Web sites the professional has accessed and the time for spent on each site. Generally, the FTP transmission takes place transparent to the user and may occur in real-time while the user is accessing Web sites. As an example, the data may be collected and transmitted for each Internet session (i.e., each time the user logs on to the Internet and searches on the Internet, the session ends when the user logs out). Alternatively, the data may collected for a plurality of Internet sessions to the appropriate data processing means, for example, the usage time may be collected and transmitted on a daily, weekly, bi-weekly or monthly basis.

The corresponding process on the service provider side termed service includes receiving relevant data and determining the charge for using the services. In step 930, the service provider side receives the relevant data and stores the data in step 940 in storage medium located on the service provider side. In step 950, the usage is computed in a functionality similar to that provided by the tracking to the report generation function shown in FIG. 8. In step 960, a bill is generated, and subsequently, in step 970, the bill is transmitted to the user, e.g., lawyer or other professional. The process ends in step 980.

It is to be noted that the bills generated in step 960 are based on the amount of time that the professional has accessed Internet sites and may also incorporate the size and organizational structure of a professional organization. As an example, when the system is used by lawyers, the lawyers may be grouped into categories, and the reports may be generated for these categories. It is to be noted that instead of bills based on the usage time, the users may be charged a flat fee for the use of the system of the present invention.

Although the various functions of the system have been illustrated as a procedural functions in FIGS. 6, 7, 8, and 9 the system can operate based on an object-oriented programming, in which case objects are called upon to perform the equivalent procedural functions illustrated in FIGS. 6, 7, 8 and 9. Object-oriented programming and the realization of flowcharted functions is well understood by those skilled in the art.

Although this invention has been illustrated by reference to specific embodiments, it will be apparent to those skilled in the art that various changes and modifications may be made which clearly fall within the scope of the invention. The invention is intended to be protected broadly within the scope of the appended claims.

## Claims

1. A professional time tracking and recouping method for tracking usage time and for creating reports based on the usage time in an Internet use environment, wherein the Internet is accessed by a user for one or more client matters, the method comprising:
receiving a logon request from the user;
authenticating the user login ID;
launching a time tracking function upon a successful user logon;
receiving URL information from the user;
recording the usage time associated with each URL received from the user; and
processing the usage time data to create one or more reports, wherein the reports are formatted in accordance with predetermined parameters,
wherein the preceding steps are performed on a personal computer of the user or a network server to be accessed by the user.

2. The method of claim 1, wherein the usage time data is based on a single Internet session.

3. The method of claim 1, wherein the usage time data is based on a plurality of Internet sessions.

4. The method of claim 1, further comprising generating an invoice, based on the usage time data, to be transmitted to the client.

5. The method of claim 4, wherein the invoice is electronically transmitted to the client.

6. The method of claim 4, wherein the invoice is printed via a printer and subsequently transmitted to the client.

7. The method of claim 1, further comprising sorting the reports by the client matter.

8. The method of claim 1, further comprising sorting the reports by the user identification.

9. A professional time tracking and recouping system for tracking usage time and for creating reports based on the usage time in an Internet use environment, wherein the Internet is accessed and used by a user for one or more client matters, the system comprising:
a tracker for tracking the usage time by the user in one internet session, wherein the functionality of the tracker is automatically launched upon a successful logon by the user;
a processor for processing the usage time associated with each URL received from the user; and
a report generator for generating one or more reports based on the processed usage time,
wherein the system resides on a personal computer of the user or on a network server to be accessed by the user.

10. The system of claim 9, further comprising a module for creating Internet access history ledger.

11. The system of claim 9, further comprising a logon module for authenticating the user identification.

12. The system of claim 9, wherein the reports are based on one or more pre-determined parameters.

13. The system of claim 9, wherein the reports are sorted by the client matters.

14. The system of claim 9, wherein the reports are sorted by the user identification.

15. The system of claim 9, further comprising a transmitter for electronically transmitting the reports to the client.

16. The system of claim 9, further comprising a printer for printing the reports to be subsequently transmitted to the client.

17. The system of claim 9, wherein the system functionality is realized by software means.

18. The system of claim 9, wherein the usage time is based on a plurality of Internet sessions.

19. The system of claim 9, further comprising an analyzer for analyzing the usage time.

## Patentansprüche

1. Verfahren zur professionellen Zeitverfolgung und -entschädigung zum Verfolgen von Nutzungszeit und zum Erzeugen von Berichten auf Basis der Nutzungszeit in einer Internetnutzungs-Umgebung, wobei auf das Internet von einem Benutzer für Angelegenheiten eines oder mehrerer Klienten zugegriffen wird und das Verfahren umfasst:
- Empfangen einer Anmeldeanforderung von dem Benutzer;
- Authentifizieren der Benutzer-Anmeldekennung;
- Auslösen einer Zeitverfolgungs-Funktion bei einer erfolgreichen Benutzer-Anmeldung;
- Empfangen von URL-Informationen von dem Benutzer;
- Aufzeichnen der Nutzungszeit, die mit jeder von dem Benutzer empfangenen URL verbunden ist; und
- Verarbeiten der Nutzungszeit-Daten, um einen oder mehrere Berichte zu erzeugen, wobei die Berichte gemäß vorgegebener Parameter formatiert werden,
wobei die vorangehenden Schritte auf einem Personal Computer des Benutzers oder einem Netwerk-Server durchgeführt werden, auf den der Benutzer zugreift.

2. Verfahren nach Anspruch 1, wobei die Nutzungszeit-Daten auf einer einzelnen Internet-Sitzung basieren.

3. Verfahren nach Anspruch 1, wobei die Nutzungszeit-Daten auf einer Vielzahl von Internet-Sitzungen basieren.

4. Verfahren nach Anspruch 1, das des Weiteren Erzeugen einer Rechnung auf Basis der Nutzungszeit-Daten umfasst, die zu dem Klienten zu senden ist.

5. Verfahren nach Anspruch 4, wobei die Rechnung elektronisch zu dem Klienten gesendet wird.

6. Verfahren nach Anspruch 4, wobei die Rechnung über einen Drucker ausgedruckt und anschließend zu dem Klienten gesendet wird.

7. Verfahren nach Anspruch 1, dass des Weiteren Sortieren der Berichte nach den Angelegenheiten des Klienten umfasst.

8. Verfahren nach Anspruch 1, dass des Weiteren Sortieren der Berichte nach der Benutzer-Kennung umfasst.

9. System zur professionellen Zeitverfolgung und -entschädigung zum Verfolgen von Nutzungszeit und zum Erzeugen von Berichten auf Basis der Nutzungszeit in einer Internetnutzungs-Umgebung, wobei auf das Internet von einem Benutzer für Angelegenheiten eines oder mehrerer Klienten zugegriffen und es dafür genutzt wird und das System umfasst:
- eine Verfolgungseinrichtung zum Verfolgen der Nutzungszeit durch den Benutzer in einer Internet-Sitzung, wobei die Funktion der Verfolgungseinrichtung automatisch bei einer erfolgreichen Anmeldung durch den Benutzer ausgelöst wird;
- eine Verarbeitungseinrichtung zum Verarbeiten der Nutzungszeit, die mit jeder von dem Benutzer empfangenen URL verbunden ist; und
- eine Bericht-Erzeugungseinrichtung, die einen oder mehrere Berichte auf Basis der verarbeiteten Nutzungszeit erzeugt,
- wobei das System auf einem Personal Computer des Benutzers oder einem Netzwerk-Server resident ist, auf den der Benutzer zugreift.

10. System nach Anspruch 9, das des Weiteren ein Modul zum Erzeugen eines Internet-Zugriffsverlaufs-Protokolls umfasst.

11. System nach Anspruch 9, das des Weiteren ein Anmeldungsmodul zum Authentifizieren der Benutzer-Kennung umfasst.

12. System nach Anspruch 9, wobei die Berichte auf einem oder mehreren vorgegebenen Parametern beruhen.

13. System nach Anspruch 9, wobei die Berichte nach Angelegenheiten der Klienten sortiert werden.

14. System nach Anspruch 9, wobei die Berichte nach der Benutzer-Kennung sortiert werden.

15. System nach Anspruch 9, dass des Weiteren einen Sender zum elektronischen Senden der Berichte zu dem Klienten umfasst.

16. System nach Anspruch 9, dass des Weiteren einen Drucker zum Ausdrucken der Berichte umfasst, die anschließend zu dem Klienten gesendet werden.

17. System nach Anspruch 9, wobei die Funktion des Systems mit Softwaremitteln realisiert wird.

18. System nach Anspruch 9, wobei die Nutzungszeit auf einer Vielzahl von Internet-Sitzungen basiert.

19. System nach Anspruch 9, dass des Weiteren eine Analysiereinrichtung zum Analysieren der Nutzungszeit umfasst.

## Revendications

1. Procédé de suivi et d'imputation comptable des temps de travail pour suivre un temps d'utilisation et à créer des rapports basés sur le temps d'utilisation dans un environnement d'utilisation Internet, dans lequel l'Internet est accédé par un utilisateur pour un ou plusieurs sujets clients, le procédé comprenant :
la réception d'une demande d'ouverture de session de l'utilisateur ;
l'authentification de l'ID de connexion de l'utilisateur ;
le lancement d'une fonction de suivi de temps lors d'une ouverture de session utilisateur réussie ;
la réception d'informations d'URL de l'utilisateur ;
l'enregistrement du temps d'utilisation associé à chaque URL reçue de l'utilisateur ; et
le traitement des données de temps d'utilisation pour créer un ou plusieurs rapports, où les rapports sont formatés selon des paramètres prédéterminés,
dans lequel les étapes précédentes sont effectuées sur un ordinateur personnel de l'utilisateur ou un serveur de réseau auquel destiné à être accédé par l'utilisateur.

2. Procédé selon la revendication 1, dans lequel les données de temps d'utilisation sont basées sur une seule session Internet.

3. Procédé selon la revendication 1, dans lequel les données de temps d'utilisation sont basées sur une pluralité de sessions Internet.

4. Procédé selon la revendication 1, comprenant en outre la génération d'une facture, sur la base des données de temps d'utilisation, devant être transmise au client.

5. Procédé selon la revendication 4, dans lequel la facture est transmise électroniquement au client.

6. Procédé selon la revendication 4, dans lequel la facture est imprimée via une imprimante et transmise ensuite au client.

7. Procédé selon la revendication 1, comprenant en outre le tri des rapports par sujet client.

8. Procédé selon la revendication 1, comprenant en outre le tri des rapports par identification d'utilisateur.

9. Système de suivi et d'imputation comptable des temps de travail pour suivre un temps d'utilisation et créer des rapports basés sur le temps d'utilisation dans un environnement d'utilisation Internet, dans lequel l'Internet est accédé et utilisé pour un ou plusieurs sujets clients, le système comprenant :
un dispositif de suivi pour suivre le temps d'utilisation par l'utilisateur dans une session Internet, où la fonctionnalité du dispositif de suivi est lancée automatiquement lors d'une ouverture de session réussie par l'utilisateur ;
un processeur pour traiter le temps d'utilisation associé à chaque URL reçue de l'utilisateur ; et
un générateur de rapport pour générer un ou plusieurs rapports sur la base du temps d'utilisation traité,
dans lequel le système réside sur un ordinateur personnel de l'utilisateur ou sur un serveur de réseau destiné à être accédé par l'utilisateur.

10. Système selon la revendication 9, comprenant en outre un module pour créer un registre historique d'accès à Internet.

11. Système selon la revendication 9, comprenant en outre un module d'ouverture de session pour authentifier l'identification de l'utilisateur.

12. Système selon la revendication 9, dans lequel les rapports sont basés sur un ou plusieurs paramètres prédéterminés.

13. Système selon la revendication 9, dans lequel les rapports sont triés par sujets clients.

14. Système selon la revendication 9, dans lequel les rapports sont triés par identification d'utilisateur.

15. Système selon la revendication 9, comprenant en outre un émetteur pour transmettre électroniquement les rapports au client.

16. Système selon la revendication 9, comprenant en outre une imprimante pour imprimer les rapports devant être transmis ensuite au client.

17. Système selon la revendication 9, dans lequel la fonctionnalité du système est réalisée par des moyens logiciels.

18. Système selon la revendication 9, dans lequel le temps d'utilisation est basé sur une pluralité de sessions Internet.

19. Système selon la revendication 9, comprenant en outre un analyseur pour analyser le temps d'utilisation.
